# EUROPEAN PATENT SPECIFICATION

(11) **EP 0 845 377 B1**
(45) Date of publication and mention of the grant of the patent: **13.09.2006**
(21) Application number: 97309537.5
(22) Date of filing: 26.11.1997
(51) Int. Cl.: B60J 7/06, B60J 7/185

(54) **Improved opening roof**
Verbessertes Sonnendach
Toit ouvrant amélioré.

(30) Priority: 29.11.1996 GB 9624866
(43) Date of publication of application: 03.06.1998
(73) Proprietor: Hollandia Weathershields Limited, Saltley, Birmingham B8 1JW (GB)
(72) Inventor: Huyer, Johannes Nicolaas, 2042 BJ Zandvoort (NL)
(74) Representative: Wiese, Gerhard

(56) References cited:
- EP-A- 0 603 834
- EP-A- 0 723 887
- US-A- 5 310 241

## Description

The invention relates to a fabric roof assembly of the kind adapted to cover a longitudinal opening in a vehicle roof according to the preamble of claim 1 and 10.

It is well known to provide a fabric folding roof assembly comprising a flexible fabric panel which is supported by a series of transverse cross-members adapted to slide in guide rails which, extend longitudinally along each side of the longitudinal roof opening. A front member supports both the front end of the fabric panel and a substantially rigid transverse flap. On closing the fabric roof assembly to cover the opening, it is important that the flap is forcibly drawn forwards in order to tension the fabric panel, and simultaneously drawn downwards to form a seal with the front of the roof opening. Motive force to open and close the panel is provided by an electric motor which acts through cables or the like directly or indirectly to slide the front member along the guide rails, and hence open or close the opening.

A problem arising with such a known roof assembly is that in order to exert the required tension on the roof panel, a powerful motor is needed. Typically, the force required to tension the panel during the final stages of closing is of the order of 20 to 25 times the force required to move the cross-members and front member along the guide rails. Hence, a powerful motor must be employed if the tensioning of the fabric panel is to be achieved by simply driving the cross-member forward along the guide rails.

In order to overcome the need for a powerful motor it is known from EP-A-0 336 414 to provide a tensioning mechanism within the guide rails at the sides of the opening. A disadvantage of this is that the guide rails need to be quite wide in order to accommodate the tensioning mechanism.

A fabric roof assembly according to the preamble of claim 1 and 10 is diclosed in US -A- 5,310,241. A mounting bracket fixed to the front cross member is provided with a cam groove, engaged by a pin member which is part of a slider movable relative to the mounting bracket. The cam groove is arranged in a vertical side wall of the mounting bracket so that the whole arrangement requires considerable space in vertical direction.

It is an object of the present invention to create a fabric roof assembly with an improved closing mechanism.

According to our invention, in a fabric roof assembly for a vehicle comprising a flexible fabric panel supported by a series of transverse cross-members adapted to slide in guide rails which extend longitudinally along each side of a longitudinal opening adapted to be closed by the fabric panel, and including a front cross-member supporting the front end of the fabric panel, the assembly is characterised by further comprising a tensioning mechanism and closing mechanism carried by the front member to tension and close the fabric panel as the roof is being closed, and driving members adapted to slide along the guide rails co-operate with the front cross-member through the tensioning and closing mechanism to move the front cross-member in a direction to close the roof. A first end portion of the tensioning mechanism is hingeably fixed to the driving member and a second end portion of the tensioning mechanism is adapted to slide within a guide channel in the guide rail so that on movement of the driving member from a first open position to an intermediate position between the first position and a second closed position, the first and second end portions are fixed relatively to one another so that the cross-member moves at the same rate as the driving member, and on further movement of the driving member from the intermediate position to the second position, the first and second end positions are displaced relative to one another so that the cross-member moves at a slower rate than the driving member. The intermediate position is defined by a locking opening provided in the guide rail into which the second end portion of the tensioning mechanism is engaged. The locking opening holds the second end portion captive once the driving member reaches the intermediate position so that on further movement of the driving member towards the second position, only the first end portion continues to move with the driving member.

This has the advantage that the mechanism for tensioning the fabric panel is attached to the front cross-member so that only the means for guiding the panel within the roof opening is provided in the guide rails. This allows the width of the guide rails to be kept to a minimum.

In this way, the tensioning of the roof panel can be readily achieved because of the mechanical advantage obtained by the difference in the rate of movement of the driving member and the cross-member.

Preferably, the second end portion of the tensioning mechanism is adapted to slide in a channel provided in the driving member. The profile of the channel may co-operate with the profile of a groove in the guide rail to prevent the second end portion moving relatively to the first end portion between the first and intermediate positions, and retaining the second end portion in the locking opening during movement of the driving member between the intermediate position and the second position.

The first and second end portions of the tensioning mechanism may define the respective ends of a driving lever and a braking lever which are both pivotally and slidably attached to the cross member, the levers being arranged so as to co-operate in a manner whereby a large relative movement of the first end portion of the tensioning mechanism (i.e. the end of the driving lever) away from the second end portion of the tensioning mechanism (i.e. the end of the locking lever) produces the

In this way, the tensioning of the roof panel can be readily achieved because of the mechanical advantage obtained by the difference in the rate of movement of the driving member and the cross-member.

Preferably, the second end portion of the tensioning mechanism is adapted to slide in a channel provided in the driving member. The profile of the channel may co-operate with the profile of a groove in the guide rail to prevent the second end portion moving relatively to the first end portion between the first and intermediate positions, and retaining the second end portion in the locking opening during movement of the driving member between the intermediate position and the second position.

The first and second end portions of the tensioning mechanism may define the respective ends of a driving lever and a braking lever which are both pivotally and slidably attached to the cross member, the levers being arranged so as to co-operate in a manner whereby a large relative movement of the first end portion of the tensioning mechanism (i.e. the end of the driving lever) away from the second end portion of the tensioning mechanism (i.e. the end of the locking lever) produces the smaller movement of the cross-member in the direction of movement of the first end portion.

The levers therefore provide the mechanism for enabling the cross member to continue forwards movement after the second end portion of the tensioning mechanism engages the locking opening, at a slower rate than the driving member is moved. This allows correct tensioning to be achieved.

The first end portion may further be adapted to pass through an opening in the end of the cross member, with the opening having a profile so that as the first end portion is moved away from the second end portion, the first end portion moves along the channel to cause the front edge of the cross member to move downwards to effect a seal with the front of the opening.

The roof may be manually or electrically operated. When the roof is electrically operated the driving members are adapted to slide along the guide rail under the control of an electric motor.

There will now be described by way of example only, one embodiment of the present invention with the aid of the following drawings in which:
**Figure 1** shows an exploded isometric view of a closing mechanism in accordance with the present invention;
**Figure 2 (a)** shows the arrangement of the tensioning means which are within the cross member in an open-position and (b) shows the section along the lines A-A in Figure 2(a).
**Figures 3(a) and (b)** shows the position of the locking lever and driving lever relative to the driving member when the roof panel is in an open position;
**Figures 4(a) and (b)** shows the position of the locking lever and driving lever as the roof panel reaches an intermediate position defined by the locking opening;
**Figures 5(a) and (b)** shows the effect of continuing to close the roof opening after the locking lever has engaged in the locking opening;
**Figures 6(a) and (b)** shows the final closed position of the roof panel with the roof panel fully tensioned; and
**Figures 7 (a) and (b) and 8 (a) and (b)** show a practical embodiment of the invention in the fully open and fully closed positions respectively.

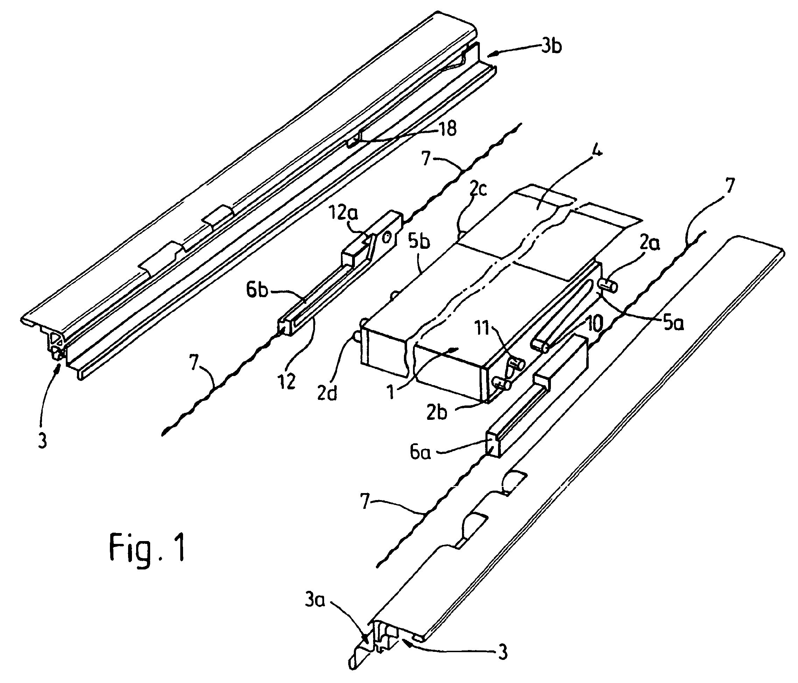

Figure 1 shows an exploded view of the component parts of the closing mechanism in accordance with one embodiment of the present invention.

A cross member 1, of which only the end portion is shown comprises a top panel and a pair of guide blocks 5a, 5b. The cross member is provided with pins 2a, 2b at a respective front and rear portion of the end panel 5a. The pins 2a, 2b are adapted to slide in a guide channel 3a provided in a guide rail 3. A corresponding pair of pins 2c, 2d are provided on the opposite end panel 5b of the cross member and work in a guide channel 3b in a second guide rail 3. In a typical application, the guide rails 3 are provided on opposing sides of a roof opening. A substantially rigid flap 4 of generally rectangular section is secured to the top panel of the cross member. A fabric panel (not shown) is sealingly fixed along an edge to a rear side of the opening and is sealingly fixed along its opposing edge to the top panel of the cross member.The cross member may be slid within the opening to open and close the roof opening, so that in a fully closed position the rigid flap 4 provides a seal with the front side of the opening with the fabric panel tensioned by the cross member.

On the sides of the roof opening, a respective first and second driving slide member 6a, 6b is provided which fits within a guide channel in the guide rails. Each of the driving slides is attached to a motor (not shown) via a cabling 7. Operation of the motor winds the cables around a pulley connected to the motor which in turn causes the driving slides 6a, 6b to slide in the guide channel in the guide rail.

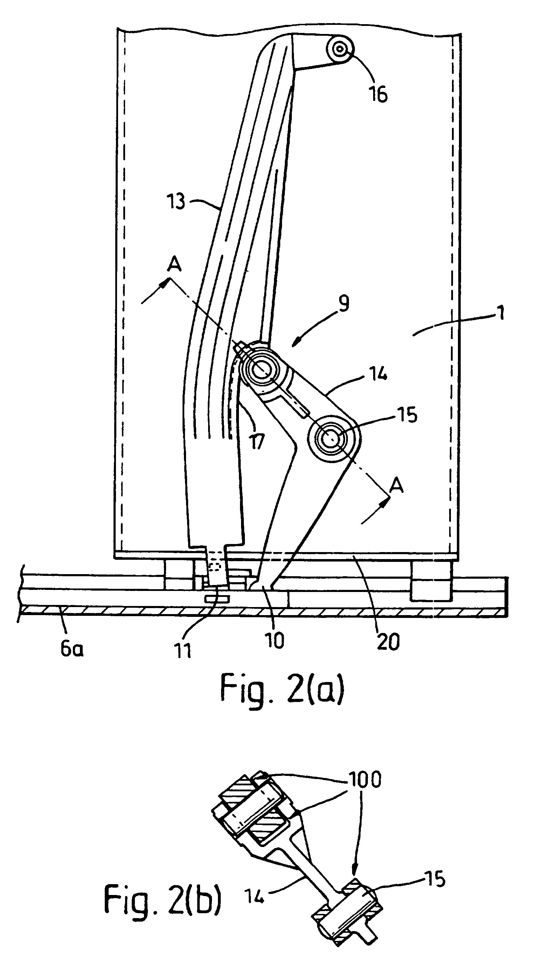

A tensioning mechanism 9 (not shown in Fig. 1 but in Fig. 2) is pivotally attached to the cross member 1 so that a first end portion and a second end portion of the tensioning mechanism protrude through a respective opening channel in the end panel of the cross member.

The driving slide is hingeably attached at a point near to its front end to the first end portion 10 of the tensioning mechanism. The driving slide 6 is also provided with a channel 12 running from a point near to the front of the first end portion 10 of the tensioning mechanism to a point towards the rear. The second end portion 11 of the tensioning mechanism, protrudes through the end guide block away from the cross member, and slidably engages the channel 12 in the driving slide.

Details of the tensioning mechanism are illustrated in Fig. 2, which shows an arrangement of the tensioning mechanism as viewed from above the cross member. The tensioning mechanism is duplicated on each side of the cross member, but only the tensioning mechanism associated with one guide rail is shown.

A locking lever 13 is pivotally and slidably attached to the front member 1 at one end 16, whilst the opposing end of the locking lever protrudes through an opening towards the rear of the end panel. The protruding end portion is slidably engaged with the channel 12 in the driving slide 6, and corresponds to the second end portion 11 of the tensioning mechanism as herein before described.

A driving lever 14 is pivotally and slidably attached to the cross member at a point 15 approximately midway along its length. One end of the driving lever 14 is adapted to move via bearings 100 along a groove 17 provided in the locking lever 13. The opposing end of the driving lever 14 passes through a channel 20 in the end portion of the cross member and is hingeably connected to the front of the driving slide 6. This end portion of the driving lever corresponds to the first end portion 10 of the tensioning mechanism as herein before described.

The arrangement of the driving lever 14 and the locking lever 13 is such that forwards movement of the end portion 10 of the driving lever away from the end portion 11 of the locking lever 13 generates a corresponding, but smaller movement of the cross member 1 in the same direction, i.e. the cross member 1 moves forwardly with respect to the end portion 11.

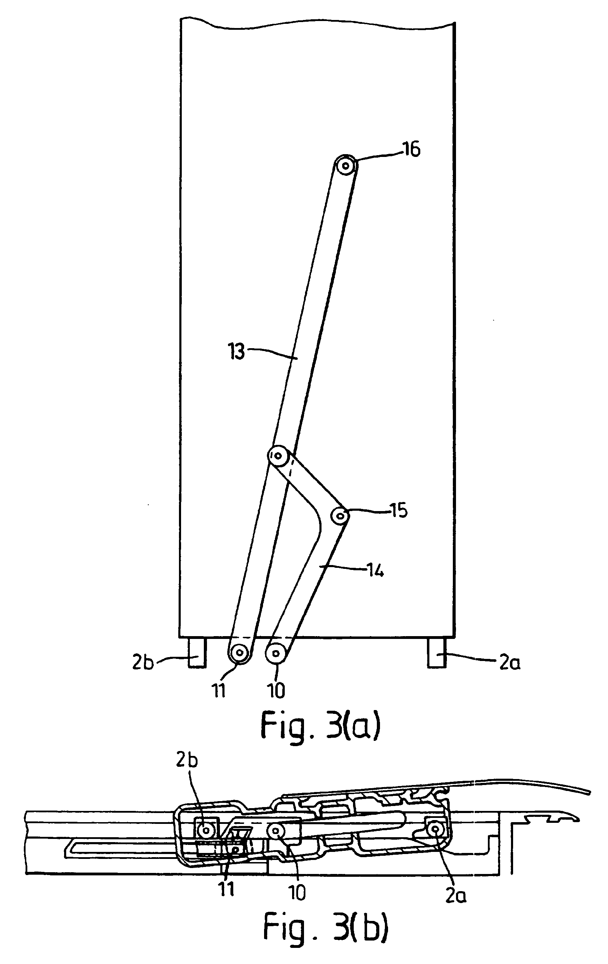

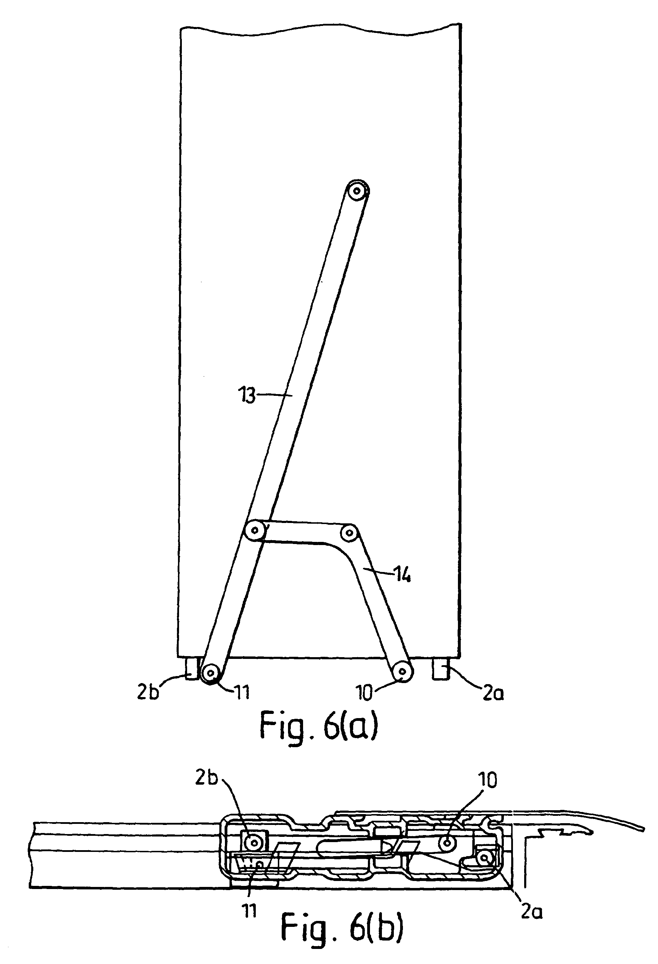

The operation of the roof assembly will now be explained with reference to Figs. 3a and 3b to 6a and 6b which show the various steps involved in closing the fabric roof panel.

Figures 3(a) and 3(b) show an open position of the roof with the position of the driving lever 14 and locking lever 13 (i.e. the tensioning mechanism) with respect to the position of the cross member 1 and driving slide 6 within the guide rail. In this position, the end portion 11 of the locking lever is held captive in the front part 12a of the channel 12 in the driving slide by the lower surface of the guide channel in the guide rail. Thus, the end portion 11 of the locking lever is fixed relative to the end portion 10 of the driving lever. Accordingly, operation of the electric motor to close the roof moves the driving slide 6 forwardly towards the front of the opening and, simultaneously, moves the cross member 1 forward at the same rate.

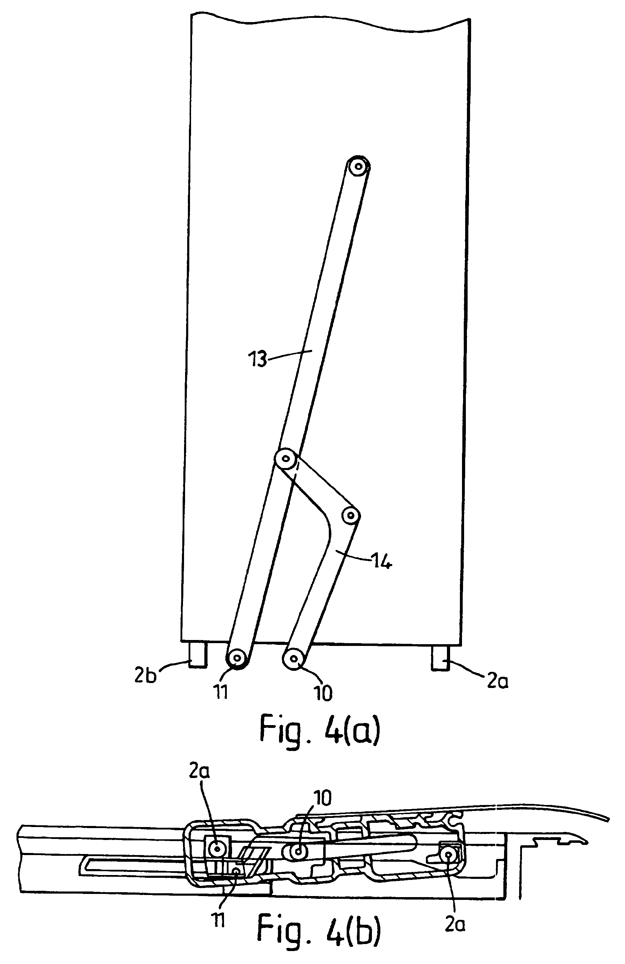

The closing action described above and as shown in Figs. 3a and 3b continues until the cross member 1 reaches an intermediate position within the opening. The intermediate position is defined by a locking opening 18 provided in the lower surface of the guide channel. As the cross member 1 is drawn forward to this position, the end portion 11 of the locking lever is forced down into the locking opening 18 by the downward slope of the front portion 12a of the channel 12 in the driving slide 6 as shown in Figs. 4a and 4b. The end portion 11 of the locking lever 13 is now free to move away from the end portion of the driving lever 14. Continued movement of the driving slide 6 in the forward direction to close the panel (not shown) results in the end of the locking lever 13 becoming captive in the locking opening 18 due to the profile of the channel 12 in the driving slide.

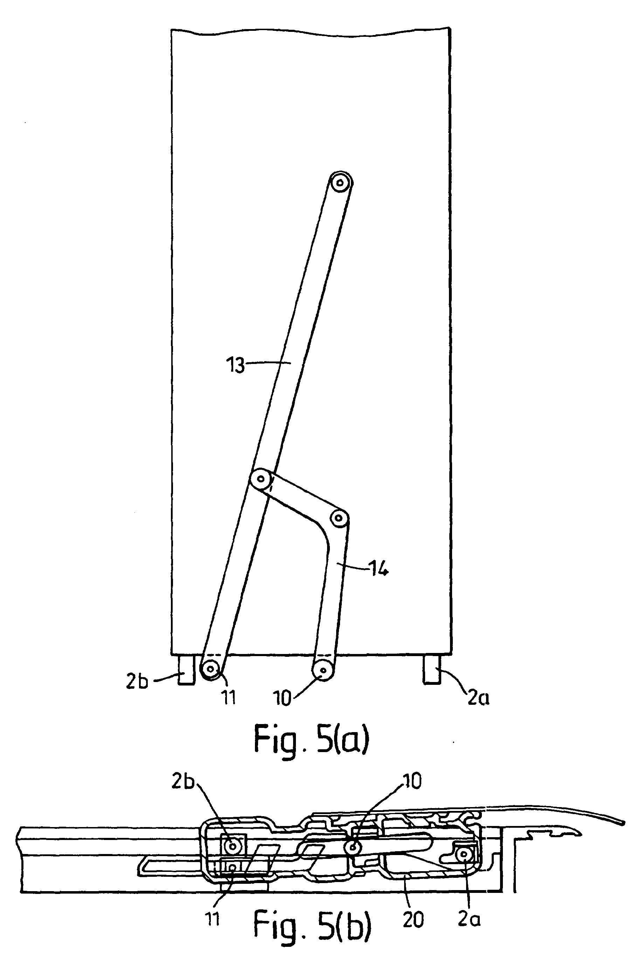

After the end of the locking lever becomes captive in the locking opening, further movement of the driving slide 6 in the forward direction causes the driving lever end portion 10 to continue to move forward. Because the end portions 10,11 are now moving away from one another, the lever action provided by the driving and locking levers causes the front member 1 to continue moving forward at a slower rate than the driving slide. This is shown in Fig. 5a and 5b. As can be seen in the figures, the profile of the channel 20 in the end panel 5a causes the front edge of the cross panel 1 to move downwards as the end portion of the driving lever moves along the channel 20. It is the fact that the driving slide now moves forwards at a faster rate than the cross member that allows adequate tensioning of the fabric panel to be achieved.

Figs. 6a and 6b show the fully closed position of the roof assembly. The end portion 10 of the driving lever 14 has reached the front of the channel in the end portion 5a of the cross member 1, and the front panel 4 has been drawn downwards on to the front edge of the roof opening. The correct tensioning and closing action has been achieved.

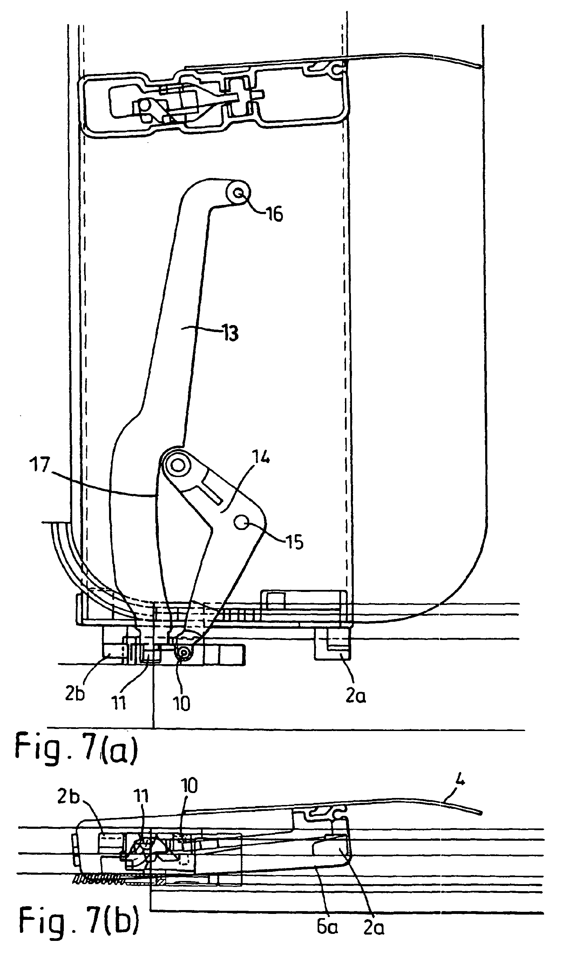

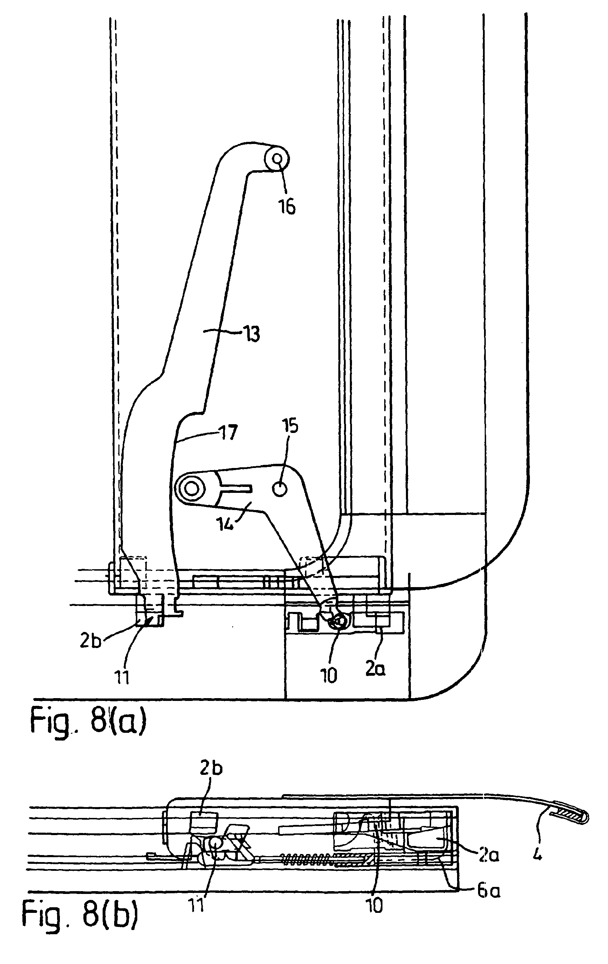

In Figures 7 (a) and 7 (b) and 8 (a) and (b), a practical embodiment of the present invention is illustrated. Figures 7 (a) and 7 (b) show the cross member positioned so that the roof is fully opened. Figure 8 (a) and 8 (b) show the roof fully closed.

In an alternative embodiment, the electric motor may be replaced by a manual roof closing mechanism.

It will be understood by the man skilled in the art that the present invention is not limited to the specific arrangement of levers described in the preferred embodiment. The invention lies in the attachment of the tensioning mechanism to the cross member so that only the driving means for guiding the cross member within the opening needs to be accommodated within the guide rails. This allows a slimline elegant design to be achieved whilst enabling the roof to be tensioned using a low power motor. Neither is it to be understood that the invention is limited to the provision of a definite intermediate position at which the end portion of the locking lever is suddenly prevented from any further forward movement. Instead, it should be understood that the invention can be achieved in a manner whereby the transition from a point where the two ends of the tensioning mechanism are fixed relative to one another to a point where they move relative to one another may be quite gradual.

## Claims

1. A fabric roof assembly for a vehicle comprising a flexible fabric panel supported by a series of transverse cross-members adapted to slide in guide rails (3) which extend longitudinally along each side of a longitudinal opening adapted to be closed by the fabric panel, and including a front cross-member (1) supporting the front end of the fabric panel, further comprising a tensioning and closing mechanism (9) which is carried by the front member (1) to tension and close the fabric panel as the roof is being closed, and driving members (6) adapted to slide along the guide rails (3) which co-operate with the front cross-member (1) through the tensioning and closing mechanism (9) to move the front cross-member (1) in a direction to close the roof, wherein a first end portion (10) of the tensioning mechanism (9) is hingeably fixed to a first one of the driving members and a second end portion (11) of the tensioning mechanism (9) is adapted to slide within a guide channel (3a) in a first one of the guide rails (3), the first driving member (6) being adapted to slide from a first open position to an intermediate position and between the intermediate position and a second closed position, in which when the first one of the driving members is between the first position and intermediate position the first and second end portions (10, 11) are adapted to be fixed relative to one another so that the front cross-member (1) moves at the same rate as the driving member, **characterised in that** the intermediate position is defined by a locking opening (18) provided in the first guide rail (3) into which the second end portion (11) of the tensioning mechanism (9) is adapted to be engaged, said locking opening (18) holding the second end portion (11) captive once the first one of the driving members (6) reaches the intermediate position so that on further movement of the driving member (6) towards the second position, only the first end portion (10) continues to move with the driving member (6).

2. A fabric roof assembly according to claim 1 **characterised in that** when the first one of the driving members (6) is between the intermediate position and the second position, the first and second end portions (10, 11) are adapted to be displaced relative to one another so that the front cross-member (1) moves at a slower rate than the first one of the driving members (6).

3. A fabric roof assembly according to either of claims 1 or 2 **characterised in that** the second end portion (11) of the tensioning mechanism (9) is adapted to slide in a channel (12) provided in the first driving member (6).

4. A fabric roof assembly according to claim 3 in which the profile of the channel (12) co-operates with the profile of a groove in the guide rail (3) to prevent the second end portion (11) moving relative to the first end portion (10) between the first position and the intermediate position, and to retain the second end portion in the locking opening (18) during movement of the first driving member (6) between the intermediate position and the second position.

5. A fabric roof assembly according to any one of claims 1 to 4 **characterised in that** the first and second end portions (10, 11) of the tensioning mechanism (9) define the respective ends of a driving lever (14) and a locking lever (13) which are both pivotally and slidably attached to the front cross member (1), the levers being arranged so as to co-operate so that a large relative movement of the first end portion of the tensioning away from the second end portion of the tensioning mechanism (i.e. the end of the locking lever) produces a smaller movement of the cross-member in the direction of movement of the first end portion.

6. A fabric roof assembly according to claim 5 **characterised in that** the first end portion (10) is adapted to pass through an opening or channel 18 in the end of the cross member (1), the opening having a profile so that as the first end portion (10) is moved away from the second end portion (11), the first end portion moves along the channel (18) to cause the front edge of the cross member (1) to move downwards to effect a seal with the front of the opening.

7. A fabric roof assembly according to any preceding claim **characterised in that** it is electrically operated.

8. A fabric roof assembly according to claim 7 **characterised in that** the driving members are adapted to slide along the guide rail under the control of an electric motor.

9. A fabric roof assembly according to any preceding claim in which a pair of locking levers and a pair of driving levers are provided, each of the locking levers having a second end portion (11) and being adapted to co-operate with guide channels on opposing sides of the front cross member and each of the driving levers having a first end portion (10) and being adapted to engage driving members on opposing sides of the front cross-member.

10. A fabric roof assembly for a vehicle comprising a flexible fabric panel supported by a series of transverse cross-members adapted to slide in guide rails (3) which extend longitudinally along each side of a longitudinal opening adapted to be closed by the fabric panel, and including a front cross-member (1) supporting the front end of the fabric panel, further comprising a tensioning and closing mechanism (9) which is carried by the front member (1) to tension and close the fabric panel as the roof is being closed, and driving members (6) adapted to slide along the guide rails (3) which co-operate with the front cross-member (1) through the tensioning and closing mechanism (9) to move the front cross-member (1) in a direction to close the roof, **characterized in that** the tensioning and closing mechanism (9) are formed by a locking lever (13) and a driving lever (14), both the locking lever (13) and the driving lever (14) being pivotally attached to the front member (1) and arranged such that forward movement of an end portion (10) of the driving lever (14) away from an end portion (11) of the locking lever (13) generates a corresponding but smaller movement of the cross member (1) in the same direction.

## Patentansprüche

1. Faltdachanordnung für ein Fahrzeug, umfassend ein flexibles Faltverdeck, das von einer Reihe von Querspriegeln abgestützt ist, die in Führungsschienen (3) verschiebbar sind, die sich längs jeder Seite einer sich längs erstreckenden, mittels des Faltverdecks verschließbaren Öffnung erstrecken, mit einem vorderen Querspriegel (1), der das vordere Ende des Faltverdecks abstützt, weiterhin umfassend einen vom vorderen Querspriegel (1) getragenen Straffungs- und Schließmechanismus (9) zum spannen und schließen des Faltverdecks beim Schließen, und zum gleiten längs der Führungsschienen (3) geeignete Antriebsmittel (6), die mit dem vorderen Querspriegel (1) durch den Straffungs- und Schließmechanismus (9) zusammenwirken, um den vorderen Querspriegel (1) in Schließrichtung des Dachs zu bewegen, wobei ein erstes Ende (10) des Straffungs- und Schließmechanismus (9) schwenkbar an einem ersten der Antriebsmittel angelenkt ist und ein zweites Ende (11) des Straffungs- und Schließmechanismus (9) zum gleiten in einem Führungskanal (3a) in einer ersten der Führungsschienen (3) geeignet ist, wobei das erste Antriebsmittel (6) dazu ausgelegt ist, von einer ersten Position in eine Zwischenposition und zwischen der Zwischenposition und einer zweiten geschlossenen Position zu gleiten, wobei, wenn das erste der Antriebsmittel sich zwischen der ersten Position und der Zwischenposition befindet, eine relative Fixierung der ersten und zweiten Enden (10, 11) zueinander vorgesehen ist, so dass der vordere Querspriegel (1) sich mit derselben Geschwindigkeit bewegt wie das Antriebsmittel, **dadurch gekennzeichnet, dass** die Zwischenposition durch eine in der ersten Führungsschiene (3) vorgesehene Verriegelungsöffnung (18) definiert wird, in die das zweite Ende (11) des Straffungs- und Schließmechanismus (9) eingreifen kann, wobei die Verriegelungsöffnung (18) das zweite Ende (11) festhält, sobald das erste der Antriebsmittel (6) die Zwischenposition erreicht, so dass bei der weiteren Bewegung des Antriebsmittels (6) auf die zweite Position zu sich nur noch das erste Ende (10) mit dem Antriebsmittel (6) weiter bewegt.

2. Faltdachanordnung nach Anspruch 1, **dadurch gekennzeichnet, dass** wenn das erste Antriebsmittel (6) sich zwischen der Zwischenposition und der zweiten Position befindet, das erste und zweite Ende (10, 11) dazu ausgelegt sind, sich relativ zueinander zu bewegen, so dass sich der vordere Querspriegel (1) mit geringerer Geschwindigkeit bewegt wie das Antriebsmittel (6).

3. Faltdachanordnung nach einem der Ansprüche 1 oder 2, **dadurch gekennzeichnet, dass** das zweite Ende (11) des Straffungs- und Schließmechanismus (9) dazu ausgelegt ist, in einem im ersten Antriebsmittel (6) vorgesehenen Kanal (12) zu gleiten.

4. Faltdachanordnung nach Anspruch 3, bei der das Profil des Kanals (12) mit dem Profil einer Nut in der ersten Führungsschiene (3) zusammenwirkt, um zwischen der ersten Position und der Zwischenposition das zweite Ende (11) an einer Relativbewegung zum ersten Ende (10) zu hindern, und um das zweite Ende während der Bewegung des ersten Antriebsmittels (6) zwischen der Zwischenposition und der zweiten Position in der Verriegelungsöffnung (18) zu halten.

5. Faltdachanordnung nach einem der Ansprüche 1 bis 4, **dadurch gekennzeichnet, dass** das erste und das zweite Ende (10, 11) des Straffungs- und Schließmechanismus (9) die jeweiligen Enden eines Antriebshebels (14) und eines Verriegelungshebels (13) definieren, die sowohl schwenkbar als auch verschiebbar am vorderen Querspriegel (1) befestigt sind, wobei die Hebel so angeordnet sind, dass sie in der Weise zusammenarbeiten, dass eine relativ große Bewegung des ersten Endes des Straffungs- und Schließmechanismus weg vom zweiten Ende des Straffungs- und Schließmechanismus eine kleinere Bewegung des vorderen Querspriegels in Richtung der Bewegung des ersten Endes erzeugt.

6. Faltdachanordnung nach Anspruch 5, **dadurch gekennzeichnet, dass** das erste Ende (10) dazu ausgelegt ist, eine Öffnung oder einen Kanal (18) am Ende des vorderen Querspriegels zu passieren, wobei die Öffnung ein derartiges Profil hat, dass das erste Ende (10) vom zweiten Ende (11) weg bewegt wird, wobei das erste Ende sich längs des Kanals (18) bewegt, um die vordere Kante des vorderen Querspriegels (1) zur Erzeugung einer Dichtung mit dem vorderen Bereich der Dachöffnung nach unten zu bewegen.

7. Faltdachanordnung nach einem der vorhergehenden Ansprüche, **dadurch gekennzeichnet, dass** sie elektrisch betätigt wird.

8. Faltdachanordnung nach Anspruch 7, **dadurch gekennzeichnet, dass** die Antriebsmittel für eine Gleitbewegung längs der Führungsschienen unter Steuerung eines Elektromotors ausgelegt sind.

9. Faltdachanordnung nach einem der vorhergehenden Ansprüche, bei der ein Paar von Verriegelungshebeln und ein Paar von Antriebshebeln vorgesehen sind, wobei jeder der Verriegelungshebel ein zweites Ende (11) aufweist und für ein Zusammenwirken mit Führungskanälen auf gegenüber liegenden Seiten des vorderen Querspriegels ausgelegt ist, und wobei jeder Antriebshebel ein erstes Ende (10) aufweist und für einen Eingriff mit Antriebsmitteln auf gegenüber liegenden Seiten des vorderen Querspriegels ausgelegt ist.

10. Faltdachanordnung für ein Fahrzeug, umfassend ein flexibles Faltverdeck, das von einer Reihe von Querspriegeln abgestützt ist, die in Führungsschienen (3) verschiebbar sind, die sich längs jeder Seite einer sich längs erstreckenden, mittels des Faltverdecks verschließbaren Öffnung erstrecken, mit einem vorderen Querspriegel (1), der das vordere Ende des Faltverdecks abstützt, weiterhin umfassend einen vom vorderen Querspriegel (1) getragenen Straffungs- und Schließmechanismus (9) zum spannen und schließen des Faltverdecks beim Schließen, und zum gleiten längs der Führungsschienen (3) geeignete Antriebsmittel (6), die mit dem vorderen Querspriegel (1) durch den Straffungs- und Schließmechanismus (9) zusammenwirken, um den vorderen Querspriegel (1) in Schließrichtung des Dachs zu bewegen, **dadurch gekennzeichnet, dass** der Straffungs- und Schließmechanismus (9) von einem Verriegelungshebel (13) und einem Antriebshebel (14) gebildet wird, wobei sowohl der Verriegelungshebel (13) als auch der Antriebshebel (14) schwenkbar am vorderen Querspriegel (1) gelagert und derart angeordnet sind, dass eine Vorwärtsbewegung des Endes (10) des Antriebshebels (14) weg vom Ende (11) des Verriegelungshebels (13) eine entsprechende aber kleinere Bewegung des vorderen Querspriegels (1) in derselben Richtung bewirkt.

## Revendications

1. Toit en tissu pour véhicule comprenant un panneau de tissu flexible soutenu par une série de traverses conçues pour coulisser dans des rails de guidage (3) disposés longitudinalement le long de chaque côté d'une ouverture longitudinale prévue pour être fermée par le panneau de tissu, et comprenant une traverse avant (1) soutenant l'extrémité avant du panneau de tissu, comprenant en outre un mécanisme de mise en tension et de fermeture (9) porté par la traverse avant (1) pour tendre et fermer le panneau de tissu lors de la fermeture du toit, et des éléments d'entraînement (6) conçus pour coulisser le long de rails de guidage (3) qui coopèrent avec la traverse avant (1) par l'intermédiaire du mécanisme de mise en tension et de fermeture (9) pour déplacer la traverse avant (1) dans un sens afin de fermer le toit, dans lequel une première partie d'extrémité (10) du mécanisme de mise en tension (9) est liée à un premier élément d'entraînement par rapport auquel elle peut pivoter et une deuxième partie d'extrémité (11) du mécanisme de mise en tension (9) est conçue pour coulisser dans une rainure de guidage (3a) ménagée dans un premier rail de guidage (3), le premier élément d'entraînement (6) étant prévu pour coulisser entre une première position ouverte et une position intermédiaire et entre la position intermédiaire et une deuxième position fermée, dans lequel, lorsque le premier élément d'entraînement se trouve entre la première position et la position intermédiaire, les première et deuxième parties d'extrémité (10, 11) sont conçues pour être fixées entre elles de telle sorte que la traverse avant (1) se déplace à la même vitesse que l'élément d'entraînement, **caractérisé en ce que** la position intermédiaire est définie par un orifice de verrouillage (18) ménagé dans le premier rail de guidage (3) dans lequel la deuxième partie d'extrémité (11) du mécanisme de mise en tension (9) est conçue pour s'engager, ledit orifice de verrouillage (18) maintenant la deuxième partie d'extrémité (11) captive une fois que le premier élément d'entraînement (6) a atteint la position intermédiaire, de telle sorte que pour tout mouvement supplémentaire de l'élément d'entraînement (6) vers la deuxième position, seule la première partie d'extrémité (10) continue à se déplacer avec l'élément d'entraînement (6).

2. Toit en tissu selon la revendication 1 **caractérisé en ce que**, lorsque le premier élément d'entraînement (6) se trouve entre la position intermédiaire et la deuxième position, la première et la deuxième partie d'extrémité (10, 11) sont conçues pour être déplacées l'une par rapport à l'autre de telle sorte que la traverse avant (1) se déplace plus lentement que le premier élément d'entraînement (6).

3. Toit en tissu selon la revendication 1 ou 2, **caractérisé en ce que** la deuxième partie d'extrémité (11) du mécanisme de mise en tension (9) est conçue pour coulisser dans une rainure (12) ménagée dans le premier élément d'entraînement (6).

4. Toit en tissu selon la revendication 3 dans lequel le profil de la rainure (12) coopère avec le profil d'une rainure ménagée dans le rail de guidage (3) pour empêcher la deuxième partie d'extrémité (11) de se déplacer par rapport à la première partie d'extrémité (10) entre la première position et la position intermédiaire, et pour retenir la deuxième partie d'extrémité dans l'orifice de verrouillage (18) pendant le mouvement du premier élément d'entraînement (6) entre la position intermédiaire et la deuxième position.

5. Toit en tissu selon l'une des revendications 1 à 4, **caractérisé en ce que** la première et la deuxième partie d'extrémité (10, 11) du mécanisme de mise en tension (9) définissent les extrémités respectives d'un levier d'entraînement (14) et d'un levier de verrouillage (13) qui sont toutes deux liées à la traverse avant (1) de façon à pouvoir pivoter et coulisser, les leviers étant disposés de façon à coopérer pour qu'un grand mouvement relatif de la première partie d'extrémité du mécanisme de mise en tension s'écartant de la deuxième partie d'extrémité du mécanisme de mise en tension (c'est-à-dire l'extrémité du levier de verrouillage) produise un plus petit mouvement de la traverse dans le sens du mouvement de la première partie d'extrémité.

6. Toit en tissu selon la revendication 5 **caractérisé en ce que** la première partie d'extrémité (10) est conçue pour traverser un orifice ou une rainure 18 ménagé(e) à l'extrémité de la traverse (1), l'orifice ayant un profil tel que, lorsque la première partie d'extrémité (10) s'écarte de la deuxième partie d'extrémité (11), la première partie d'extrémité se déplace le long de l'orifice (18) pour forcer le bord avant de la traverse (1) à se déplacer vers le bas pour réaliser un joint avec l'avant de l'orifice.

7. Toit en tissu selon n'importe quelle revendication précédente, **caractérisé en ce qu'**il est manoeuvré électriquement.

8. Toit en tissu selon la revendication 7, **caractérisé en ce que** les éléments d'entraînement sont conçus pour coulisser le long du rail de guidage sous l'action d'un moteur électrique.

9. Toit en tissu selon n'importe quelle revendication précédente comportant une paire de leviers de verrouillage et une paire de leviers d'entraînement, chaque levier de verrouillage ayant une deuxième partie d'extrémité (11) et étant conçu pour coopérer avec les rainures de guidage sur les côtés opposés de la traverse avant et chaque levier d'entraînement ayant une première partie d'extrémité (10) et étant conçu pour s'engager dans les éléments d'entraînement sur les côtés opposés de la traverse avant.

10. Toit en tissu pour véhicule comprenant un panneau de tissu flexible soutenu par une série de traverses conçues pour coulisser dans des rails de guidage (3) disposés longitudinalement le long de chaque côté d'une ouverture longitudinale prévue pour être fermée par le panneau de tissu, et comprenant une traverse avant (1) soutenant l'extrémité avant du panneau de tissu, comprenant en outre un mécanisme de mise en tension et de fermeture (9) porté par la traverse avant (1) pour tendre et fermer le panneau de tissu lors de la fermeture du toit, et des éléments d'entraînement (6) conçus pour coulisser le long de rails de guidage (3) qui coopèrent avec la traverse avant (1) par l'intermédiaire du mécanisme de mise en tension et de fermeture (9) pour déplacer la traverse avant (1) dans un sens afin de fermer le toit, **caractérisé en ce que** le mécanisme de mise en tension et de fermeture (9) est formé par un levier de verrouillage (13) et un levier d'entraînement (14), le levier de verrouillage (13) et le levier d'entraînement (14) étant liés à la traverse avant (1) de façon à pouvoir pivoter et étant disposés de telle sorte qu'un mouvement vers l'avant d'une partie d'extrémité (10) du levier d'entraînement (14) écartant celle-ci d'une partie d'extrémité (11) du levier de verrouillage (13) génère un mouvement correspondant mais de plus faible amplitude de la traverse (1) dans le même sens.
